Europäisches Patentamt

European Patent Office

Office européen des brevets

(19)

(11) Numéro de publication : **0 022 691**
**B1**

# (12) FASCICULE DE BREVET EUROPÉEN

(45) Date de publication du fascicule du brevet :
09.06.82

(21) Numéro de dépôt : **80400924.9**

(22) Date de dépôt : **20.06.80**

(51) Int. Cl.³ : **B 60 N   1/10**

(54) **Dispositif de réglage longitudinal d'un siège pliant de véhicule automobile.**

(30) Priorité : **04.07.79 FR 7917316**

(43) Date de publication de la demande :
**21.01.81 (Bulletin 81/03)**

(45) Mention de la délivrance du brevet :
**09.06.82 Bulletin 82/23**

(84) Etats contractants désignés :
**BE CH DE GB IT LI NL SE**

(56) Documents cités :
**BE A 345 639**
**FR A 627 249**
**GB A 705 249**
**GB A 872 118**
**GB A 1 450 938**
**GB A 2 009 592**
**US A 3 292 970**
**US A 3 357 737**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Blasin, Serge**
**6 rue Carriou**
**F-92350 Le Plessis Robinson (FR)**

(74) Mandataire : **Ernst-Schonberg, Michel et al**
**RNUR - S. 0804 B.P. 103**
**F-92109 Boulogne-Billancourt (FR)**

EP 0 022 691 B1

Imprimerie Jouve, 18, rue St-Denis, 75001 Paris, France

Dispositif de réglage longitudinal d'un siège pliant de véhicule automobile

La présente invention concerne un dispositif de réglage longitudinal d'un siège pliant de véhicule automobile du type comportant un dossier ajustable longitudinalement, qui est relié à l'assise au moyen de biellettes, et un dispositif de blocage pour fixer le dossier dans la position d'utilisation désirée.

Le brevet FRA-627 249 décrit un siège oscillatoire et pliant dont le dossier est déplaçable longitudinalement. A cet effet le dossier est relié à l'assise au moyen de deux biellettes articulées qui constituent avec le montant du dossier et avec un longeron de l'assise un parallélogramme dans le but d'obtenir un soulèvement de l'assise à la suite d'un déplacement angulaire ou longitudinal du dossier.

On connaît (GBA-2 009-592) un siège dont le dossier articulé sur l'assise porte également une bielle articulée à la base du dossier et sur le plancher, et cette bielle peut être immobilisée par un verrou dont la manœuvre interdit ou autorise le rabattement du dossier sur l'assise.

Est également connu (brevet US-A-3 292 970) un siège dont le dossier est relié à l'assise par un ensemble de deux biellettes dans le but d'obtenir un déplacement de l'assise par suite du déverrouillage et du rabattement du dossier sur l'assise.

Lorsque les sièges de ce type sont placés à proximité du volume de rangement des bagages et ne sont séparés dudit volume que par leur dossier, il est avantageux d'adapter le volume de rangement aux besoins et de l'accroître en pliant l'un des sièges d'une même rangée. Lorsque les sièges de ce type font partie du poste de conduite, il est avantageux de pouvoir les adapter aux caractéristiques morphologiques de l'individu.

A partir de l'état de la technique précité l'invention se propose donc d'obtenir au choix un déplacement longitudinal du dossier par rapport à une assise fixe ou le déplacement simultané du dossier et de l'assise accompagné ou non par le rabattement du dossier sur l'assise puis le basculement vers l'avant de l'ensemble ainsi constitué.

L'invention a aussi pour objet un siège dans lequel le déplacement du dossier résulte d'un mouvement de translation vers l'avant et d'un mouvement de rotation vers le haut, ce qui a pour but d'accroître le volume de chargement derrière le dossier, de réduire l'inclinaison du dossier et d'améliorer le confort du siège dans cette nouvelle position peu inclinée du dossier.

Conformément à l'invention, pour obtenir un volume de rangement accru derrière le dossier du siège et/ou adapter le siège aux caractéristiques morphologiques de l'individu, il est prévu :
— une biellette de liaison du dossier à l'assise, qui porte l'axe de pliage du dossier sur l'assise ;
— une autre biellette articulée autour d'un axe parallèle à cet axe de pliage et portant un verrou d'immobilisation du dossier, la partie inférieure de cette biellette étant montée à rotation autour d'un axe solidaire de l'assise ;
— une barre de liaison réunissant les deux biellettes et assurant conjointement avec les biellettes, l'ajustement longitudinal du dossier par rapport à l'assise par suite d'une translation et d'une rotation de ce dossier.

Le dispositif ainsi réalisé autorise :
— le déplacement longitudinal du dossier de siège par rapport à l'assise demeurée fixe ;
— le basculement du dossier sur l'assise.

Le dispositif peut être évidemment associé à différents types de sièges. Il convient notamment aux sièges dont l'assise est rendue solidaire du véhicule au moyen de glissières, dont la glissière mobile est montée sur la support de l'assise et dont la glissière fixe est solidaire du plancher du véhicule. Il convient également aux sièges conventionnels dont la partie avant du support de l'assise porte l'axe de pivotement vers le haut de l'ensemble du siège après pliage du dossier sur l'assise.

D'autres caractéristiques et avantages de l'invention apparaîtront dans la description qui va suivre en référence aux dessins ci-joints sur lesquels :

La figure 1 est une vue en élévation du siège selon un mode de réalisation de l'invention, le siège étant représenté monté sur des glissières dans sa position reculée.

La figure 2 est une vue en élévation du siège représenté à la figure 1, le siège étant représenté dans sa position avancée. Cette figure montre l'amplitude du réglage du dossier.

La figure 3 est une vue en élévation du siège représenté dans sa position pliée.

Les figures 4, 5, 6 sont des vues représentatives du siège dans les positions référencées aux figures 1 à 3 mais selon un deuxième mode de réalisation de l'invention, le siège étant monté à pivotement autour d'un axe fixé à la partie avant du support de l'assise.

Les figures 7, 8, 9 sont des vues représentatives du siège dans les positions référencées aux figures 1 à 3 selon un mode de réalisation simplifié du dispositif.

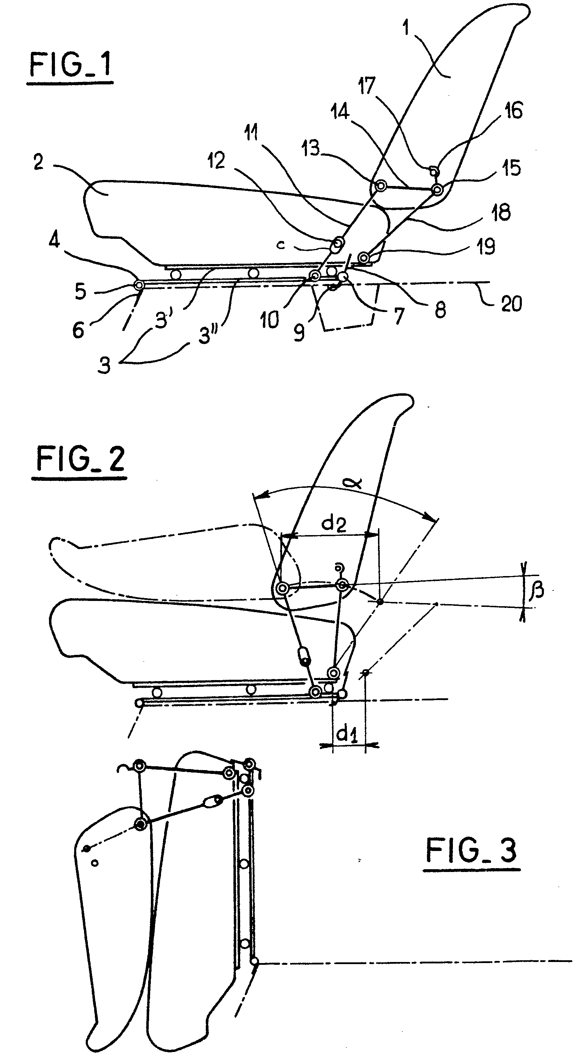

Les figures 1 à 3 se réfèrent à un dispositif qui permet le déplacement continu du dossier du siège d'avant en arrière ou inversement. L'assise du siège se déplace de manière sensiblement proportionnelle au déplacement du dossier.

Après avoir rabattu le dossier sur l'assise, on peut déverrouiller le soubassement de l'assise du plancher et basculer l'ensemble dossier-assise en position relevée.

Le siège représenté se compose d'un dossier 1 et d'une assise 2. L'assise 2 repose sur un jeu de glissières verrouillables entre elles et de profils conjugués connus en soi. Les glissières peuvent être munies d'un double levier de commande de déverrouillage permettant la commande de l'avant ou de l'arrière du siège. Un tel levier est connu par le brevet 2 159 749. Chaque ensemble de glissières se compose d'une coulisse supérieure mobile 3′ et d'une glissière inférieure 3″. La coulisse supérieure mobile 3′ est rigidement reliée au soubassement de l'assise 2 et elle porte le mécanisme de verrouillage et de déverrouillage de la coulisse par rapport à la glissière inférieure.

Chaque glissière inférieure 3″ porte à sa partie avant un charnon mobile 4 lié par un axe 5 au charnon fixe 6 solidarisé au plancher 20 du véhicule. La partie arrière de l'une au moins des glissières 3″ porte l'axe de rotation 7 d'un verrou 8 à ressort de rappel engageable dans une gâche 9 fixée au plancher 20.

Les glissières 3″ portent enfin l'axe de rotation 10 d'une biellette de liaison 11 du dossier 1 à l'assise 2. Selon l'exemple de réalisation représenté, les biellettes de liaison 11 sont situées sous l'habillage latéral du siège et de part et d'autre de celui-ci.

La biellette de liaison 11 est positivement reliée à l'assise 2 au moyen d'un organe de commande réalisé selon l'exemple représenté sous la forme d'une coulisse c qui se déplace par rapport à l'organe de commande du dossier par déplacements longitudinaux de l'assise. L'organe de commande du dossier précité est constitué par un axe 12 solidaire de l'assise 2. L'extrémité de la biellette 11, opposée à l'axe de rotation 10, porte le palier d'un axe de pliage 13 du dossier 1 solidaire de l'armature du dossier 1 et situé à la base de celui-ci. L'axe 13 est relié à un axe parallèle 15 également situé à la base du dossier par une barre de liaison 14. L'axe 15 constitue l'axe d'articulation d'une deuxième biellette de liaison 18 dont la partie inférieure est montée à rotation autour d'un axe 19 longitudinalement décalé par rapport à l'axe 10 et qui est solidaire du soubassement de l'assise 2 ou de la coulisse 3′. Enfin, l'axe 15 porte un verrou d'immobilisation 16 du dossier 1 qui s'accroche sur un doigt 17 porté par l'armature du dossier pour obtenir la position d'immobilisation du dossier. Au verrou d'immobilisation est associé un ressort de rappel sur le doigt 17.

Le fonctionnement du dispositif est le suivant :

Le déplacement « d₁ » de l'assise 2 est obtenu par l'utilisateur (passager ou personne voulant charger le coffre) en agissant sur l'une des commandes de déverrouillage des glissières 3. Ce déplacement se traduit par une rotation α de la biellette 11 autour de l'axe 10 entraînée par l'axe 12 lié à l'assise 2. L'axe 12 coulisse dans la glissière oblongue de la biellette 11 et engendre un déplacement $d_2$ de l'axe 13. L'axe 13 entraîne par la barre 14 l'axe 15, lequel grâce à la barre 14 a entraîné en rotation et par voie de conséquence la biellette 18 qui traduit une translation du dossier 1 et une légère rotation de celui-ci d'une valeur d'angle β.

Le rapport des longueurs des organes 11, 14, 18 et la distance entre les axes 10 et 19 permettent de faire varier l'inclinaison du dossier d'un angle β qui sera maintenu dans des limites assurant un maximum de confort au siège.

Si l'on désire basculer le dossier (transport d'objets volumineux, accessibilité aux places arrière), il suffit de manœuvrer le verrou 16 qui libère le doigt 17. On peut alors rabattre le dossier sur l'assise autour de l'axe 13 et plier le siège afin de libérer la surface occupée sur le plancher.

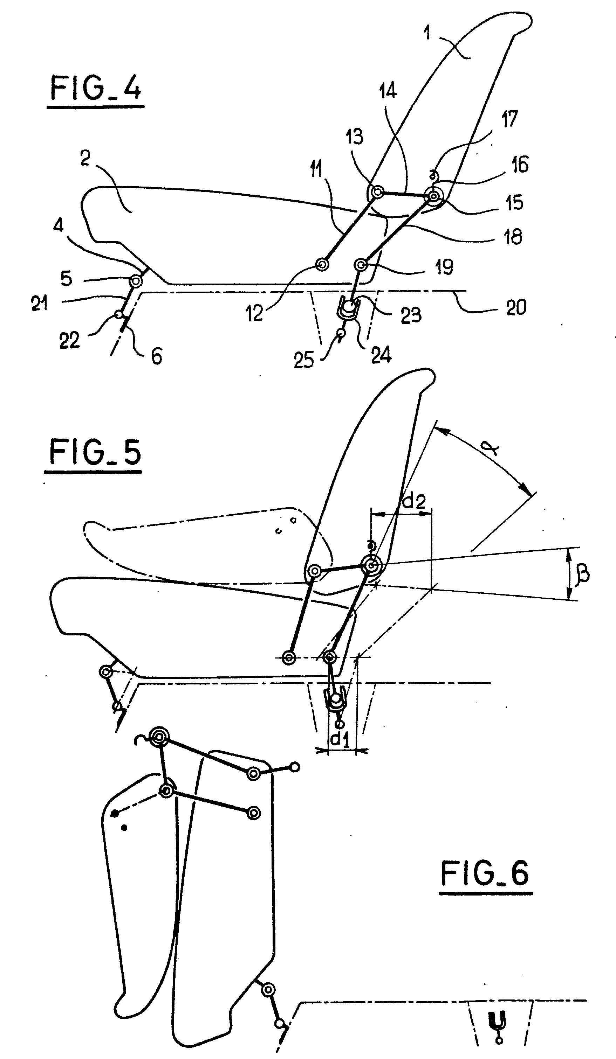

Après avoir rabattu le dossier 1 sur l'assise, on actionne le verrou 8 qui immobilisait l'assise sur le plancher 20. On bascule alors le siège vers l'avant par une rotation autour de l'axe 5. Les figures 4 à 6 se réfèrent à une variante du dispositif lorsque le siège n'est pas monté sur un ensemble de glissières.

Le dispositif, situé de part et d'autre de l'axe médian du siège, permet le déplacement continu du dossier du siège d'avant en arrière et inversement. L'assise du siège, dans ce mouvement, se déplace sensiblement proportionnellement au déplacement du dossier. Après avoir rabattu le dossier sur l'assise, on peut déverrouiller à l'aide d'une commande particulière le soubassement de l'assise du plancher et basculer en position relevée l'ensemble du siège.

Le siège se compose d'un dossier 1 et d'une assise 2. Cette dernière est articulée à sa partie avant par deux charnons 4 fixés sur le soubassement de l'assise 2. Les charnons 4 portent une bielle d'articulation 21 centrée par l'axe d'articulation 5 engagé dans les charnons. L'extrémité de la bielle 21 porte l'axe 22 engagé dans un charnon 6 fixé sur le plancher 20 du véhicule. La partie postérieure de l'assise porte un axe 12 autour duquel oscille l'extrémité d'un levier de guidage 11, lequel possède à son autre extrémité une chape d'articulation montée à rotation autour d'un axe 13 porté par la base du dossier 1. Autour de l'axe 13 s'articule une barre de liaison 14. La barre 14 lie l'axe 13 à un axe parallèle 15, également porté par la base du dossier. L'axe 15 constitue l'axe d'articulation d'une deuxième biellette de liaison 18 dont la partie inférieure est montée à rotation autour d'un axe 19. Comme dans l'exemple de réalisation précédemment décrit, un verrou à ressort coopère avec un doigt 17 et immobilise le dossier. La biellette de liaison 18 se prolonge au-delà de l'axe 19 par un système de verrouillage avec le plancher 20. Le système de verrouillage est constitué par une serrure conventionnelle 24 montée à articulation autour d'un axe 25 lié au plancher 20. Dans la serrure 24 s'engage une pêne 23 monté à l'extrémité inférieure de la biellette de liaison.

La commande de déverrouillage peut être assurée par tout moyen connu.

Le fonctionnement du dispositif est le suivant :

Le déplacement d₁ de l'assise est obtenu par l'utilisateur après avoir déverrouillé les organes 14 et 18, soit en repoussant le dossier 1, soit en avançant l'assise. Au déplacement d₁ est consécutive une variation angulaire α des biellettes 21 et 18 qui, par la biellette 11 et la barre 14, déplace et incline le dossier d'amplitudes $d_2$ et β.

Le rapport des longueurs des éléments 11, 14, 18 et la distance des axes 12 et 19 permettent, pour un déplacement variable d₁, d'incliner le dossier d'une valeur β que l'homme de l'art veillera à maintenir dans des limites assurant un maximum de confort au passager.

Comme dans la configuration précédente, on peut basculer le dossier. Cette manœuvre s'effectue à l'aide du verrou d'immobilisation 16 qui libère le doigt 17.

Le dossier articulé autour de l'axe 13 peut être alors rabattu sur l'arrière.

Pour plier le siège il suffit, après avoir basculé le dossier 1, d'actionner la serrure 24 qui immobilisait l'assise sur le plancher et de basculer le siège vers l'avant par une rotation autour des axes 22 et 5 grâce aux biellettes d'articulation 21. Les biellettes 21 permettent de réduire l'encombrement vertical du siège plié en amenant l'assise 2 au contact du plancher.

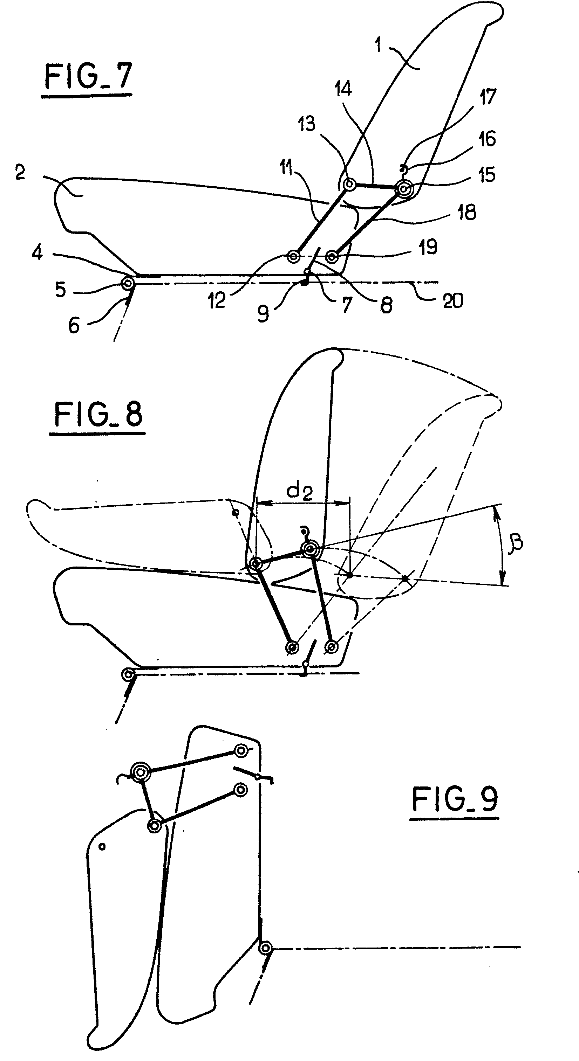

Selon l'exemple représenté aux figures 7 à 9, le siège se compose d'un dossier 1 et d'une assise 2. L'assise 2 est articulée au plancher 20 à sa partie avant par une charnière d'axe 5 dont un charnon 4 est fixé au soubassement de l'assise 2 et dont l'autre charnon 6 est fixé rigidement au plancher 20.

La partie arrière du soubassement de l'assise porte un axe 12 autour duquel oscille une biellette de guidage 11 qui possède à son autre extrémité un palier d'articulation autour d'un axe 13 porté par le dossier 1.

Sur l'axe 13 s'articule la barre de liaison 14 dont l'extrémité est fixée à un axe 15 porté par la base du dossier 1. L'axe 15 porte une biellette 18 et un verrou d'immobilisation 16 rappelé par un ressort de commande sur un doigt 17 ainsi que cela a été décrit en référence des autres figures. On retrouve, également, dans l'exemple représenté, les éléments 13, 18, 19 décrits précédemment.

Agissant sur les organes 14 et 18 et centré sur l'axe 15, se trouve un dispositif de verrouillage de ces organes commandé par un levier de déverrouillage ou un bouton de commande.

La partie postérieure du soubassement de l'assise 2 porte l'axe 7 d'un verrou 8 à ressort qui s'accroche dans une gâche 9 liée au plancher.

Le déplacement $d_2$ du dossier 1 est obtenu après déverrouillage des organes 14 et 18.

Le rapport des longueurs des bras de levier 11, 14, 18 et la distance des axes 12 et 19 permettent, pour un déplacement $d_2$ du dossier, de faire varier son inclinaison d'une valeur β que l'homme de l'art veillera à maintenir dans des limites assurant un maximum de confort au passager.

Si on désire plier le siège, la manœuvre s'effectue par libération du doigt 17.

On rabat ensuite le dossier articulé autour de l'axe 13 sur l'assise et on peut plier plus complètement le siège afin de libérer le maximum de place sur le plancher.

Pour cette dernière manœuvre, il suffit après avoir basculé le dossier 1 d'actionner le verrou 8 qui immobilisait l'assise sur le plancher et de lever le siège vers l'avant par une rotation autour de l'axe 5.

**Revendications**

1. Dispositif de réglage longitudinal d'un siège pliant de véhicule automobile du type comportant un dossier (1) ajustable longitudinalement par rapport à l'assise (2) et qui est relié à cette assise (2) au moyen de deux biellettes (11, 18), tandis qu'un dispositif de blocage et de fixation (16, 17) immobilise le dossier (1) dans les positions d'utilisation du siège, caractérisé par le fait que pour obtenir un accroissement du volume de rangement derrière le dossier du siège et/ou adapter le siège aux caractéristiques morphologiques de l'individu on prévoit une biellette de liaison (11) du dossier (1) à l'assise (2), qui porte l'axe de pliage (13) du dossier sur l'assise tandis qu'une autre biellette (18) articulée autour d'un axe (15) parallèle à l'axe de pliage (13) et portant un verrou (16) d'immobilisation du dossier possède sa partie inférieure montée à rotation autour d'un axe (19) solidaire de l'assise (2), et qu'une barre de liaison (14) réunit les deux biellettes (11-18) et assure conjointement avec les biellettes l'ajustement longitudinal du dossier par rapport à l'assise par suite d'une translation et d'une rotation de ce dossier.

2. Dispositif selon la revendication 1, caractérisé par le fait que les extrémités inférieures des biellettes de liaison (11, 18) sont respectivement montées à rotation autour de deux axes (10, 19) longitudinalement décalés, respectivement portés par une glissière fixe (3'') et par une coulisse mobile (3') du siège et que la biellette (11) reliée à l'assise par l'intermédiaire d'une coulisse c, est montée à rotation autour de l'axe (10) porté par la glissière fixe et est positivement reliée à l'assise du siège.

3. Dispositif selon la revendication 2, caractérisé par le fait que l'assise porte l'organe de commande (12) du dossier, commande provoquée par déplacements longitudinaux de l'assise.

4. Dispositif selon la revendication 1, caractérisé par le fait que l'une des biellettes (18) de liaison du dossier (1) à l'assise (2) se prolonge par un système de verrouillage (23, 24) de cette biellette (18) avec le plancher (20).

**Claims**

1. Device for longitudinal regulating of a reclining seat in an automobile of the type comprising a back portion (1), longitudinally adjustable relative to the seat portion (2), and which is connected to said seat portion (2), by means of two rods (11, 18), whereas a locking and fixing means (16, 17) immobilizes the back portion (1) in the positions of use of the seat, characterized by the fact that for obtaining an increase in volume of the putting back the back portion of the seat and /or adapting the seat to the morphological characteristics of the person, a connecting rod (11) of the back portion (1) with the seat portion (2) is provided which carries the reclining axle (13) of the back portion on the seat, while another rod (18), pivoted around an axle (15), parallel to the reclining axle (13) and having a stopping bolt (16), has its own lower portion rotatably mounted around an axle (19) which is integral with the seat portion (2), and that a connecting bar (14) unites the two rods (11, 18) and assures together with the rods the longitudinal adjustment of the back portion relative to the seat portion as a result of moving and rotating the back portion.

2. Device according to claim 1, characterized by the fact that the lower ends of the connecting rods (11, 18) are rotatably mounted around two longitudinally staggered axles (10, 19) respectively, which are respectively carried by a fixed sliding guide (3″) and by a movable slide (3′) of the seat and that the rod (11), connected to the seat portion by means of a slide (C) is rotatably mounted around the axle (10), carried by the fixed sliding guide and is positively connected to the seat portion of the seat.

3. Device according to claim 2, characterized by the fact that the seat portion carries the control means (12) of the back portion, with the control being caused by longitudinal displacements of the seat portion.

4. Device according to claim 1, characterized by the fact that one of the connecting rods (18) of the back portion (1) with the seat portion (2) is extended by a locking system (23, 24) of said rod (18) with the floor (20).

**Ansprüche**

1. Vorrichtung zum Längsregulieren eines nach hinten kippbaren Sitzes in einem Kraftfahrzeug, des Typs, der einschliesst : eine im Verhältnis zum Sitzteil (2) längs veränderbare Lehne (1), die mit dem genannten Sitzteil (2) durch zwei Bügel (11, 18) verbunden ist, während eine Verschliessvorrichtung (16, 17) die Lehne (1) in den Gebrauchslagen festlegt, dadurch gekennzeichnet, dass zur Erlangung einer Vergrösserung der Rückführung der Lehne des Sitzes und/oder der Angleichung des Sitzes an die Körperform der betreffenden Person, ein Verbindungsbügel (11) der Lehne (1) mit dem Sitzteil (2) vorgesehen ist, der mit der Lageveränderungsachse (13) der Lehne auf dem Sitz versehen ist, während ein anderer Bügel, der drehbar and die Achse (15) angelenkt ist, die zu der Lageveränderungsachse (13) parallel liegt und einen Stoppbolzen (16) hat, mit seinem unteren Teil drehbar um eine Achse (19) angeordnet ist, die mit dem Sitzteil (2) fest verbunden ist ; und dadurch, dass eine Verbindungsstange (14) die beiden Bügel (11, 18) verbindet und zusammen mit den Bügeln die Längsregulierung der Lehne im Verhältnis zu dem Sitzteil als ein Ergebnis der Bewegung und Lageveränderung der Lehne sichert.

2. Vorrichtung gemäss Anspruch 1, dadurch gekennzeichnet, dass jedes der unteren Enden der Verbindungsbügel (11, 18) drehbar um je eine von zwei längs versetzten Achsen (10, 19) gelagert ist, welche Achsen in einer festliegenden Gleitschiene (3″) bzw. einem beweglichen Gleitteil (3′) des Sitzes angebracht sind, und dass der Bügel (11), der mit dem Sitzteil durch einen Gleitteil (c) verbunden ist, drehbar um die Achse (10) angebracht ist, welche sich auf der festliegenden Gleitschiene befindet und fest mit dem Sitzteil des Sitzes verbunden ist.

3. Vorrichtung gemäss Anspruch 2, dadurch gekennzeichnet, dass der Sitzteil die Steuermittel (12) der Lehne trägt, wobei die Betätigung durch Längsverschiebung des Sitzteils erfolgt.

4. Vorrichtung gemäss Anspruch 1, dadurch gekennzeichnet, dass einer der Verbindungsbügel (18) der Lehne (1) mit dem Sitzeil (2) durch ein Verriegelungssystem (23, 24) des Bügels (18) mit dem Boden (20) verlängert ist.

FIG_1

FIG_2

FIG_3

FIG_4

FIG_5

FIG_6

FIG_7

FIG_8

FIG_9